# EUROPEAN PATENT SPECIFICATION

(11) **EP 3 216 626 B1**
(45) Date of publication and mention of the grant of the patent: **16.10.2019**
(21) Application number: 15857826.0
(22) Date of filing: 28.08.2015
(51) Int. Cl.: B60C 11/13, B60C 11/03, B60C 11/11

(54) **PNEUMATIC TIRE**
LUFTREIFEN
PNEU

(30) Priority: 05.11.2014 JP 2014225028
(43) Date of publication of application: 13.09.2017
(73) Proprietor: Bridgestone Corporation, Tokyo 104-8340 (JP)
(72) Inventor: SAEKI, Kentaro, Tokyo 104-8340 (JP)
(74) Representative: Oxley, Robin John George
(86) International application number: PCT/JP2015/074371
(87) International publication number: WO 2016/072133

(56) References cited:
- WO-A1-2015/086622
- WO-A1-2015/086622
- JP-A- H0 624 212
- JP-A- 2002 219 909
- JP-A- 2005 271 792
- JP-A- 2005 297 845
- JP-A- 2005 297 845
- JP-A- 2009 029 255
- JP-A- 2013 514 220
- US-A1- 2005 211 354
- US-A1- 2013 192 733

## Description

### [Technical Field]

The present invention relates to a pneumatic tire having a tread formed with a plurality of line grooves, particularly to a tread structure of a pneumatic tire.

### [Background Art]

In a pneumatic tire having a tread formed with a plurality of land portions defined by a plurality of line grooves, the line grooves promote drainage to thereby secure a frictional force (wet grip performance) even on a wet road surface.

However, when the land portions defined by the line grooves are grounded and the rigidity of the land portions cannot be maintained to undergo considerable compressive deformation and falling-down (collapsing), uneven wear of the tread is liable to occur, energy loss due to hysteresis loss arising from the deformation is increased, and rolling resistance is increased.

In view of this, an example has been proposed wherein projecting portions are formed to project from a side surface of the land portion toward the land portion on the other side such that when the land portions are grounded, compressive deformation of the land portion causes the projecting portion to contact the land portion on the other side, and the contacting projecting portion supports the land portions on both sides, whereby rigidity of the land portions is maintained and deformation is suppressed (see, for example, Patent Documents 1 and 2).

Attention is also drawn to the disclosures of US2013/192733, US2005/211354 and JP2005-297845, and to the disclosure of EP3094503 which forms part of the state of the art under Article 54(3) EPC.

### [Prior Art Documents]

### [Patent Documents]

[Patent Document 1]
   JP No. 2011-245996 A
[Patent Document 2]
   JP No. 2012-11799 A

Patent Document 1 discloses a tread structure wherein side walls on both sides of each circumferential groove extending in the tread circumferential direction are both provided with projecting portions projecting into the groove, and the opposed projecting portions make contact with each other at the time of grounding.

In addition, Patent Document 2 discloses a tread structure wherein a wall surface on one side of a communication portion where a transverse groove extending in the tread width direction communicates with a circumferential groove is provided with a projection (projecting portion) projecting toward a wall surface on the other side.

### [Summary of the Invention]

### [Problem to be Solved by the Invention]

In the tread structure described in Patent Document 1, when the grounded land portions undergo compressive deformation and the projecting portions facing each other come close to each other to cause the end surfaces to contact each other, forces may not necessarily be exerted evenly, and the contact surfaces of the end surfaces may slip on each other (sliding contact). When the end surfaces make sliding contact with each other, the force with which the projecting portions support the land portions on both sides thereof is weakened, making it difficult to suppress the deformation of the land portions and to support them. Thus, it may become difficult to restrain uneven wear of the tread and an increase in rolling resistance.

In addition, the deformation of the land portions and the deformation of the projecting portions due to the sliding contact may obstruct the draining property of the line grooves, resulting in a lowering in wet grip performance.

In the tread structure described in Patent Document 2, when the grounded land portions undergo compressive deformation and the projection (projecting portion) contacts the wall surface on the other side, the contact surfaces may slip on each other, like in the structure described in Patent Document 1. As a result of the sliding contact, the force with which the projection supports the land portions on both sides thereof is weakened, and, eventually, it may become difficult to restrain uneven wear of the tread and an increase in rolling resistance.

Besides, since the projection extends from the wall surface on one side to the vicinity of the wall surface on the other side, rigidity of the projection itself is poor, and the force with which the projection supports the land portions on both sides is weakened. As a result, the deformation of the land portions may obstruct the draining property and may lower the wet grip performance.

The present invention has been made in consideration of the above-mentioned points. Accordingly, it is an object of the present invention to provide a pneumatic tire wherein a projecting portion, coming into contact with an opposed surface by compressive deformation of land portions due to grounding of a tread, firmly supports the land portions on both sides of a line groove, and suppresses deformation of the land portions, whereby rolling resistance can be reduced while maintaining the wet grip performance.

### [Means for Solving the Problem]

In order to achieve the above object, the present invention provides a pneumatic tire as claimed in claim 1.

The present invention further provides a pneumatic tire as claimed in claim 2.

According to the present invention, the rough surface may include a multiplicity of tapered-off projections formed on a flat surface.

According to the present invention, preferably, the angle of a tapered-off tip of the projection is around 90 degrees.

In a preferred embodiment of the present invention, the line grooves are circumferential grooves extending in a tread circumferential direction, and the projecting portions are formed to project into the circumferential grooves.

In a preferred embodiment of the present invention, the line grooves are transverse grooves extending in a tread width direction, and the projecting portions are formed to project into the transverse grooves.

According to a preferred embodiment of the present invention, the line grooves are circumferential grooves extending in a tread circumferential direction and transverse grooves extending in a tread width direction, and the projecting portions are formed to project into the circumferential grooves and the transverse grooves.

### [Effects of the Invention]

According to the present invention, in a pneumatic tire having a tread formed with a plurality of land portions defined by a plurality of line grooves, projecting portions project from both of opposed side surfaces of the land portions located adjacent to each other with the line groove therebetween toward each other. When the land portions undergo compressive deformation due to grounding, the projecting portions projecting from both of the opposed side surfaces of the adjacent land portions toward each other come close to each other, and the closely opposed end surfaces make contact with each other.

Since the end surfaces contacting each other are both formed with rough surfaces having a high frictional resistance, they engage each other upon contact and their slippage is restrained, whereby the projecting portions contacting each other can together firmly support the land portions on both sides thereof. Therefore, compressive deformation of the land portions is suppressed, and falling-down (collapsing) of the land portions is prevented. Accordingly, the rigidity of the land portions is maintained, whereby uneven wear of the tread is restrained, energy loss due to hysteresis loss arising from the deformation can be suppressed, and rolling resistance can be reduced.

Note that since the projecting portion is formed in that region of the land portion which is deeper than the tread surface and deformation of the land portions and deformation of the projecting portions due to sliding contact are restrained, the draining property of the line grooves is secured, and wet grip performance can be maintained.

According to the present invention, in a pneumatic tire having a tread formed with a plurality of land portions defined by a plurality of line grooves, projecting portions are formed to project from one of opposed side surfaces of the land portions located adjacent to each other with the line groove therebetween toward the other side surface. When the land portions undergo compressive deformation upon grounding, the projecting portion projecting from one of the opposed side surfaces of the adjacent land portions toward the other side surface comes closer to, and makes contact with the other side surface opposed.

Since the end surface of the projecting portion and the side surface opposed to the end surface making contact with each other are both formed with rough surfaces having a high frictional resistance, they engage each other upon contact, and slippage thereat is restrained. This ensures that the projecting portions making contact can firmly support the land portions on both sides thereof. Accordingly, compressive deformation of the land portions is suppressed, falling-down (collapsing) of the land portions is prevented, and rigidity of the land portions is maintained, whereby uneven wear is restrained, energy loss due to hysteresis loss arising from the deformation can be suppressed, and rolling resistance can be reduced.

Note that since the projecting portion is formed in that region of the land portion which is deeper than the tread surface and the deformation of the land portions and the deformation of the projecting portions due to sliding contact are restrained, the draining property of the line grooves is secured, and wet grip performance can be maintained.

According to a pneumatic tire of a preferred embodiment of the present invention, when rough surfaces each having a multiplicity of tapered-off projections formed on a flat surface make contact with each other, the rugged patterns formed by the projections engage each other, to increase frictional resistance and minimize slippage thereat. As a result, the projecting portions making contact can firmly support the land portions on both sides thereof, uneven wear of the tread due to deformation can be restrained, and rolling resistance can be reduced.

According to a pneumatic tire of a preferred embodiment of the present invention, the angle of the tapered-off tips of the projections is around 90 degrees, so that the rugged patterns formed by the projections firmly engage each other to restrain slippage thereat assuredly. As a result, the projecting portions making contact can firmly support the land portions on both sides thereof, uneven wear due to deformation can be restrained more securely, and rolling resistance can be further reduced.

According to a pneumatic tire of a preferred embodiment of the present invention, the projecting portions are formed to project into circumferential grooves. Therefore, particularly at the time of cornering, falling-down (collapsing) of the land portions is restrained, uneven wear can be restrained, and rolling resistance can be reduced.

According to a pneumatic tire of a preferred embodiment of the present invention, the projecting portions are formed to project into transverse grooves. Therefore, particularly at the time of acceleration or deceleration, falling-down (collapsing) of the land portions is restrained, uneven wear of the tread can be restrained, and rolling resistance can be reduced.

According to a pneumatic tire of a preferred embodiment of the present invention, the projecting portions are formed to project into circumferential grooves and transverse grooves. Therefore, both at the time of cornering and at the time of acceleration or deceleration of a vehicle, falling-down (collapsing) of the land portions is restrained, uneven wear of the tread can be restrained, and rolling resistance can be reduced.

### [Brief Explanation of Drawings]

FIG. 1 is a partial plan view of a tread of a pneumatic tire of Example 1 according to a first embodiment of the present invention.
FIG. 2 is a partial enlarged perspective view of the tread.
FIG. 3 is a partial enlarged perspective view of an end surface of a projecting portion projecting from a land portion of the tread.
FIG. 4 is a partial enlarged perspective view showing a deformed state of the land portions of the tread when a load is exerted thereon.
FIG. 5 is a plan view of a tread of a pneumatic tire of Example 2.
FIG. 6 is a partial enlarged perspective view of the tread.
FIG. 7 is a plan view of a tread of a pneumatic tire of Example 3.
FIG. 8 is a partial enlarged perspective view of the tread.
FIG. 9 is a plan view of a tread of a pneumatic tire of Example 4.
FIG. 10 is a partial enlarged perspective view of the tread.
FIG. 11 is a plan view of a tread of a pneumatic tire of Example 5.
FIG. 12 is a partial enlarged perspective view of the tread.
FIG. 13 is a plan view of a tread of a pneumatic tire of Example 6 according to a second embodiment.
FIG. 14 is a partial enlarged perspective view of the tread.
FIG. 15 is a plan view of a tread of a pneumatic tire of Example 7.
FIG. 16 is a partial enlarged perspective view of the tread.
FIG. 17 is a plan view of a tread of a pneumatic tire of Example 8.
FIG. 18 is a partial enlarged perspective view of the tread.
FIG. 19 is a plan view of a tread of a pneumatic tire of Example 9.
FIG. 20 is a partial enlarged perspective view of the tread.
FIG. 21 is a plan view of a tread of a pneumatic tire of Example 10.
FIG. 22 is a partial enlarged perspective view of the tread.

### [Description of Embodiments]

Embodiments of the present invention will be described below by referring to the drawings.

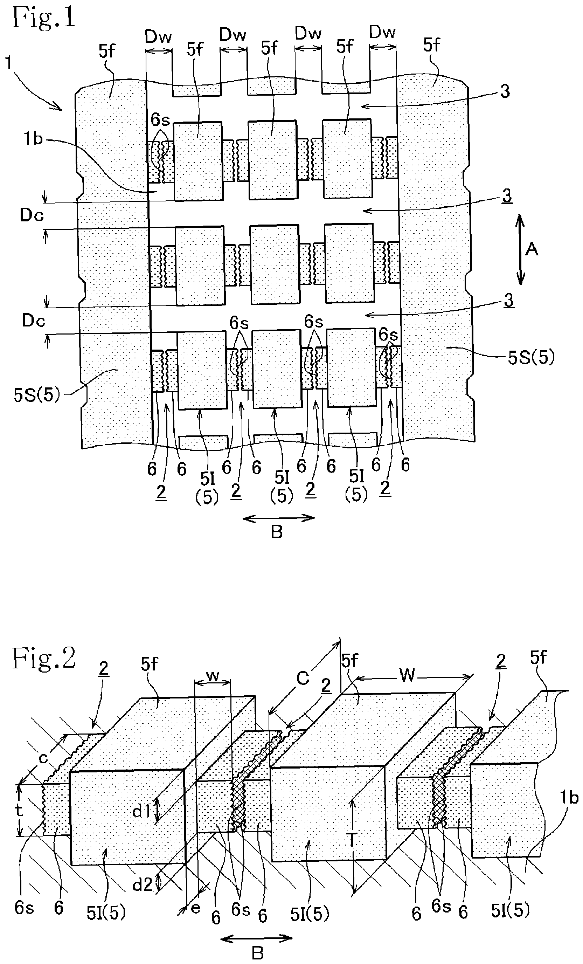

A first embodiment of the present invention is illustrated in FIGS. 1 to 12.

The first embodiment relates to a tread of a pneumatic tire which is provided with projecting portions in circumferential grooves extending in a tread circumferential direction A, and Example 1 as one example thereof will be described based on FIGS. 1 to 4.

A tread 1 of a pneumatic tire of Example 1 forms a tread pattern wherein four circumferential grooves 2 extending in the tread circumferential direction A are formed at regular intervals, and a multiplicity of transverse grooves 3 extending in a tread width direction B between the outside circumferential grooves 2, 2 on both outer sides in regard of the tread width direction B are formed at regular intervals over the whole circumference.

The four circumferential grooves 2 have the same groove width Dw, and, also, the transverse grooves 3 all have the same groove width Dc (see FIG. 1).

The circumferential grooves 2 and the transverse grooves 3 are both line grooves having groove bottoms 1b at the same depth.

The tread 1 is formed with a multiplicity of land portions 5 defined by the four circumferential grooves 2 and the multiplicity of transverse grooves 3.

The land portions 5 include a multiplicity of rectangular parallelepiped inside land portions 51 formed on the inner sides of the outside circumferential grooves 2, 2, and outside land portions 5S, 5S formed continuously in an annular form on the outer sides of the outside circumferential grooves 2, 2.

As depicted in FIG. 2, the inside land portion 51 is a rectangular parallelepiped having a thickness T from the groove bottom 1b in a tire radial direction (corresponding to the depth of the grooves), a width length C in the tread circumferential direction, and a width length W in the tread width direction.

In Example 1, projecting portions 6, 6 are formed to project from both of opposed side surfaces of the land portions 5, 5 located adjacent to each other with the circumferential groove 2 therebetween toward each other.

The projecting portion 6 projecting in the tread width direction B is formed to project in a quadrangular prismatic shape wherein an inside surface is located at a position higher than the groove bottom 1b and an outside surface is located at a position lower than a tread surface (outer surface) 5f of the land portion 5.

The projecting portions 6, 6 facing each other are formed in symmetry to project by the same projection amount w until they come close to each other.

Referring to FIG. 2, the projecting portion 6 projects into an intermediate depth region of the circumferential groove 2, in a quadrangular prismatic shape having a thickness t in the tire radial direction, a width length c in the tread circumferential direction, and a projection amount w in the tread width direction.

Specifically, an outside surface (outer surface) of the projecting portion 6 is located at a position deeper by a spacing d1 than the tread surface 5f, which is the outer surface of the land portion 5 in regard of the tire radial direction, in the circumferential groove 2, and an inside surface (inner surface) of the projecting portion 6 is located at a position higher by a spacing d2 than the groove bottom 1b of the circumferential groove 2.

In addition, side surfaces of the projecting portion 6 are located at positions deviated to the inner sides by a distance e from both ends in regard of the tire circumferential direction of that projection side surface of the inside land portion 51 from which the projecting portion 6 projects.

Thus, the projecting portion 6 is formed to project in the quadrangular prismatic shape, from the land portion 5 into the circumferential groove 2.

In addition, closely opposed end surfaces 6s, 6s of the projecting portions 6, 6 projecting from the opposed side surfaces of the land portions 5, 5 located adjacent to each other with the circumferential groove 2 therebetween are both formed to be rough surfaces having a high frictional resistance.

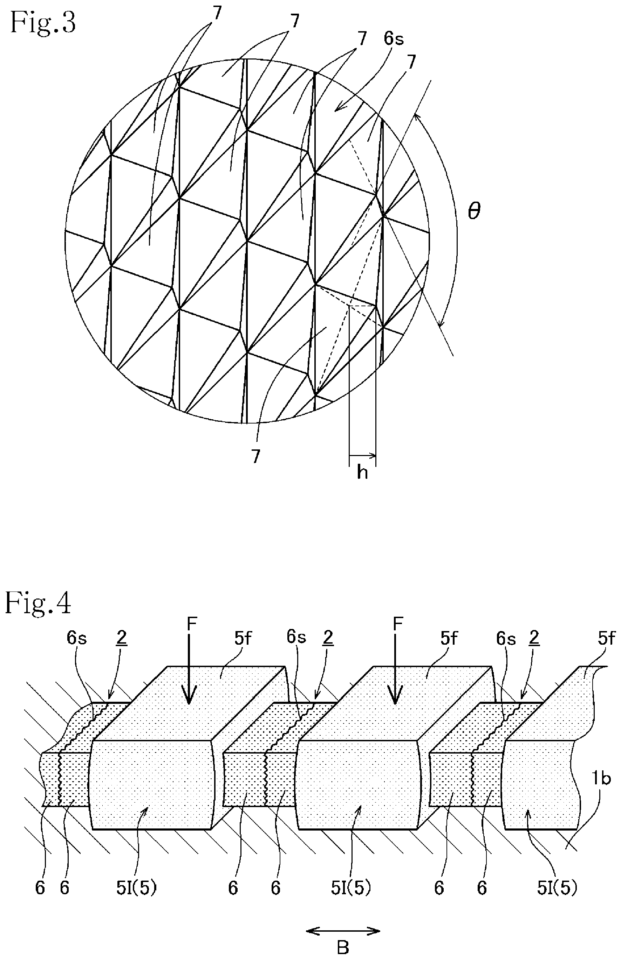

In Example 1, as shown in enlarged form in FIG. 3, the end surface 6s of the projecting portion 6 forms a rough surface wherein quadrangular pyramidal minute projections 7 are arranged in a matrix pattern.

Where the height of the quadrangular pyramid of the projection 7 is h and the angle of the tapered-off tip of the projection 7 is represented by an angle θ formed between opposed triangular side surfaces of the quadrangular pyramid, the height h of the projection 7 in Example 1 is 2.0 mm, and the tip angle θ is approximately 90 degrees.

Note that such a rough surface can be formed at the end surface of the projecting portion 6 by, for example, a method in which a belt-shaped member formed with a rough surface is preliminarily produced and it is adhered to the end surface of the projecting portion 6.

The tread 1 in Example 1 has the structure as described above, and its state, when the land portions 5 are grounded and a load F is exerted on the tread surface 5f, is schematically illustrated in FIG. 4. The land portions 5 undergo compressive deformation by receiving the load F on the tread surface 5f.

The four side surfaces of the land portion 5 are swelled at their central portions under the influence of the load F, the projecting portions 6, 6 formed to project from the opposed side surfaces of the land portions 5, 5 located adjacent to each other with the circumferential groove 2 therebetween come close to each other, and the opposed end surfaces 6s, 6s of the projecting portions 6, 6 make contact with each other.

Since the end surfaces 6s, 6s making contact with each other are formed to be rough surfaces wherein the quadrangular pyramidal minute projections 7 are arranged in a matrix pattern, rugged patterns composed of the projections 7 engage each other, whereby slipping is restrained. Therefore, the projecting portions 6, 6 making contact with each other can together firmly support the land portions 5, 5 on both sides thereof.

Consequently, compressive deformation of the land portions 5 is suppressed, falling-down (collapsing) of the land portions 5 is prevented, and rigidity of the land portions 5 is maintained, whereby uneven wear is restrained, energy loss due to hysteresis loss arising from deformation can be suppressed, and rolling resistance can be reduced.

Particularly at the time of cornering of a vehicle, falling-down (collapsing) of the land portions 5 is restrained, uneven wear can be restrained, and rolling resistance can be reduced.

In addition, the projecting portion 6 is located in an intermediate depth region of the circumferential groove 2. As shown in FIG. 4, when the land portions 5 are grounded and the opposed projecting portions 6, 6 make contact with each other in an integral manner, spaces permitting drainage are formed on the upper and lower sides of the projecting portions 6, 6 making contact with each other within the circumferential groove 2.

Besides, the land portions 5 do not fall down (collapse) into the circumferential groove 2 to hamper drainage. Further, the end surfaces 6s, 6s of the projecting portions 6, 6 making contact with each other are prevented from slipping, by the engagement of the rugged patterns formed by the projections 7. Therefore, a situation in which the end surfaces 6s, 6s slip on each other to project to the upper and lower sides, thereby blocking the spaces formed on the upper and lower sides of the projecting portions 6, 6 and spoiling the draining property can be prevented from occurring. Consequently, draining property of the circumferential grooves 2 is secured, and wet grip performance can be enhanced.

With respect to a pneumatic tire having the tread structure of Example 1, rolling resistance performance and wet grip performance were tested, and the test results were compared with those of Prior Art Examples 1 and 2 for evaluation, the evaluation results being set forth in Table 1.

Specifications are also set forth in Table 1.

**[Table 1]**

| Tread structure | | Prior Art Example 1 (without projecting portions) | Prior Art Example 2 (without rough surfaces) | Example 1 (with rough surfaces) |
|---|---|---|---|---|
| Groove width | Dw(mm) | 10.0 | 10.0 | 10.0 |
| | Dc(mm) | 10.0 | 10.0 | 10.0 |
| Land portion | T(mm) | 20.0 | 20.0 | 20.0 |
| | C(mm) | 60.0 | 60.0 | 60.0 |
| | W(mm) | 35.0 | 35.0 | 35.0 |
| Projecting portion | t(mm) | - | 14.0 | 14.0 |
| | c(mm) | - | 50.0 | 50.0 |
| | w(mm) | - | 4.8 | 4.8 |
| | d1(mm) | - | 3.0 | 3.0 |
| | d2(mm) | - | 3.0 | 3.0 |
| | e(mm) | - | 5.0 | 5.0 |
| Rough surface | h(mm) | - | - | 2.0 |
| | θ(°) | - | - | 90 |
| Rolling resistance coefficient, RRC (index) | | 100 | 127 | 133 |
| Wet grip index | | 100 | 106 | 110 |

The pneumatic tire of Example 1 has a tire size of 315/70R22.5, and the tread has a tread pattern wherein four circumferential grooves 2 extending in the circumferential direction with a groove width Dw of 10 mm are arranged in the tread width direction, and a multiplicity of transverse grooves 3 extending in the tread width direction with a groove width Dc of 10 mm are arranged in the tread circumferential direction, to form a multiplicity of land portions 5 defined by the circumferential grooves 2 and the transverse grooves 3.

The land portions 5 each have a rectangular parallelepiped shape with a thickness T in the tire radial direction of 20 mm, a width length C in the tread circumferential direction of 60 mm, and a width length W in the tread width direction of 35 mm.

The pneumatic tires of Prior Art Examples 1 and 2 also have the same tire size as that in Example 1, and their treads have the same tread pattern as that in Example 1.

In Prior Art Example 1, the land portions are not formed with the projecting portions, and in Prior Art Example 2, the land portions are formed with the same projecting portions as those of Example 1.

The projecting portion 6 in Example 1 has a configuration wherein the thickness t in the tire radial direction is 14 mm, the width length c in the tread circumferential direction is 50 mm, the projection amount w in the tread width direction is 4.8 mm, the spacing d1 between the tread surface 5f and the upper surface of the projecting portion 6 is 3 mm, the spacing d2 between the groove bottom 1b and the lower surface of the projecting portion 6 is 3 mm, and the distance e from both ends in regard of the tread circumferential direction of that projection side surface of the inside land portion 51 from which the projecting portion 6 projects to the side surfaces of the projecting portion 6 is 5 mm.

In the pneumatic tire of Prior Art Example 2, the same projecting portions as above are formed to project from both of opposed side surfaces of the land portions located adjacent to each other with the circumferential groove therebetween toward each other.

However, while the end surfaces 6s of the projecting portions 6 in Example 1 are formed with rough surfaces wherein quadrangular pyramidal minute projections 7 are arranged in a matrix pattern, the end surfaces of the projecting portions in Prior Art Example 2 are not formed with rough surfaces but formed to be simple flat surfaces.

The pneumatic tires of Example 1 and Prior Art Examples 1 and 2 as above were put to performance tests of rolling resistance performance and wet grip performance, and the evaluation results are set forth in Table 1.

In the rolling resistance test, the rolling resistance was measured by the force method according to the international standard International Organization for Standardization (ISO) 28580.

The evaluation results of the rolling resistance coefficient RRC shown in Table 1 were obtained by a method wherein with respect to rolling resistance coefficient RRC obtained by dividing the measured value of rolling resistance by load, the reciprocal of the rolling resistance coefficient RRC is used, and is expressed in index while taking the value for Prior Art Example 1 as 100.

A higher value of this index means a lower rolling resistance.

In the wet grip test, the wet grip was measured by the passenger car method according to the international standard ISO 15222.

The evaluation results of the wet grip index shown in Table 1 are measured values of wet grip, expressed in index while taking the value for Prior Art Example 1 as 100.

A higher value of this index means better wet grip performance.

As shown in Table 1, in Prior Art Example 2 wherein the projecting portions were present but their end surfaces were not rough surfaces, the rolling resistance coefficient RRC was 127 and the wet grip index was 106, both of which are superior to those in Prior Art Example 1 wherein the projecting portions were not provided.

On the other hand, in Example 1 wherein the end surfaces 6s of the projecting portions 6 were rough surfaces, the rolling resistance coefficient RRC was 133 and the wet grip index was 110, which shows further enhancement of rolling resistance performance and wet grip performance as compared to Prior Art Example 2.

Now, other Examples 2, 3, 4, and 5 of the first embodiment wherein projecting portions are provided in circumferential grooves of a tread will be described below.

Examples 2, 3, 4, and 5 have the same tread pattern as that in Example 1, wherein the circumferential grooves 2, transverse grooves 3 and land portions 5 are denoted by the same reference symbols as used in Example 1.

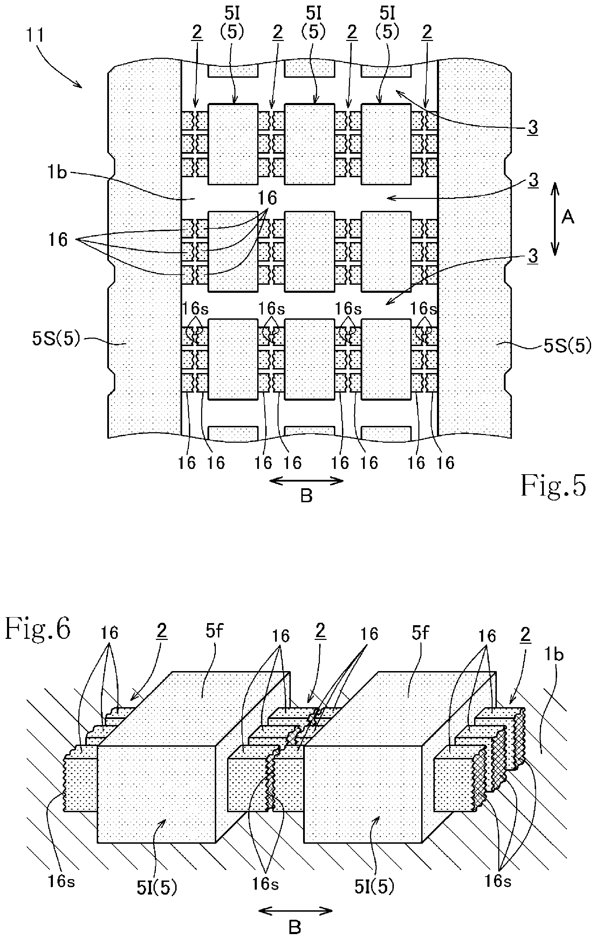

First, as shown in FIGS. 5 and 6, a tread 11 of Example 2 has a configuration wherein projecting portions 16, 16, 16 corresponding to configurations obtained by trisecting the projecting portion 6 in Example 1 in the tread circumferential direction A project from side surfaces of the land portions 5 into the circumferential groove 2.

Closely opposed end surfaces 16s, 16s of the projecting portions 16, 16 are both formed with rough surfaces having a high frictional resistance. The rough surfaces are configured in the same manner as the rough surfaces in Example 1.

When the land portions 5 are grounded, the opposed end surfaces 16s, 16s make contact with each other, the rough surfaces engage each other, and they do not slip on each other but together support the land portions 5. By this, rigidity of the land portions 5 is secured, and rolling resistance performance and wet grip performance are enhanced.

In Example 2, also, spaces are present between the three projecting portions 16, 16, 16 projecting from the land portion 5, so that draining property is superior to that in Example 1, and, particularly, enhanced wet grip performance is realized.

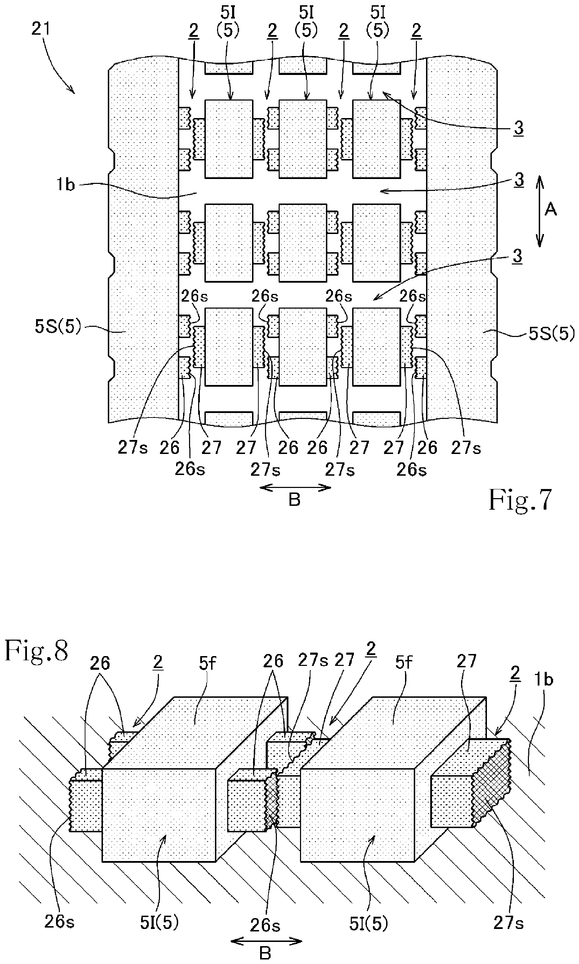

As illustrated in FIGS. 7 and 8, a tread 21 of Example 3 has a configuration wherein two small-width projecting portions 26, 26 adjacent to each other in the circumferential direction A project from one of opposed side surfaces of land portions 5, 5 located adjacent to each other with the circumferential groove 2 therebetween, one large-width projecting portion 27 projects from the other of the opposed side surfaces, and closely opposed end surfaces 26s, 26s and end surface 27s of the two small-width projecting portions 26, 26 and the one large-width projecting portion 27 are formed with rough surfaces having a high frictional resistance. The rough surfaces are configured in the same manner as the rough surfaces in Example 1.

When the land portions 5 are grounded, the three sets of end surfaces 26s, 26s and end surfaces 27s, which are opposite to each other, make contact with one another, the rough surfaces engage one another, and they do not slip on one another but together support the land portions 5. By this, rigidity of the land portions 5 is secured, and rolling resistance performance and wet grip performance are enhanced.

In Example 3, also, spaces are provided between the two small-width projecting portions 26, 26, so that draining property is superior to that in Example 1, and, particularly, enhanced wet grip performance is realized.

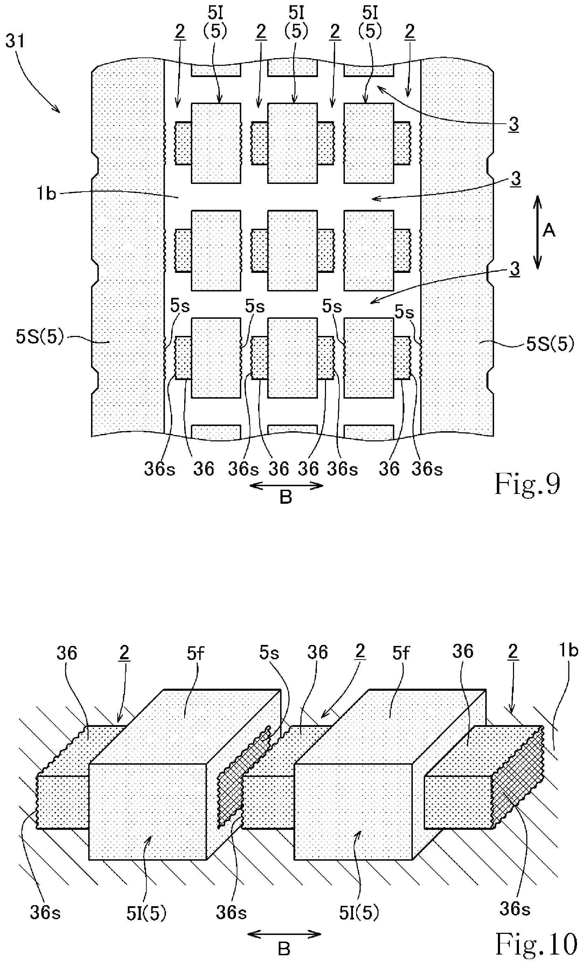

As shown in FIGS. 9 and 10, a tread 31 of Example 4 has a configuration wherein a projecting portion 36 is formed to project from one of opposed side surfaces of land portions 5, 5 located adjacent to each other with the circumferential groove 2 therebetween toward the other of the side surfaces.

An end surface 36s of the projecting portion 36 and an opposed surface 5s as a side surface of the land portion 5 opposed to the end surface 36s, which are close to each other, are both formed to be rough surfaces having a high frictional resistance. The rough surfaces are configured in the same manner as the rough surfaces in Example 1.

When the land portions 5 are grounded, the end surfaces 36s of the projecting portions 36 and the opposed surfaces 5s as the side surfaces opposed to the end surfaces 36s make contact with each other, the rough surfaces engage each other, and they do not slip on each other but together support the land portions 5. By this, rigidity of the land portions 5 is secured, and rolling resistance performance and wet grip performance are enhanced.

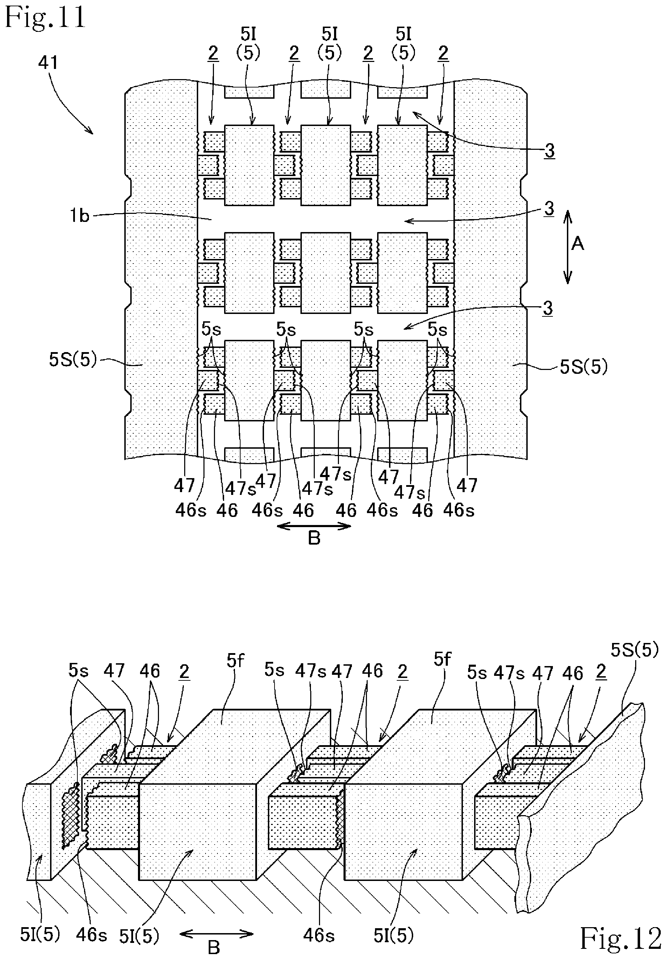

As illustrated in FIGS. 11 and 12, a tread 41 of Example 5 has a configuration wherein two small-width projecting portions 46, 46 adjacent to each other in the circumferential direction A project from one of opposed side surfaces of land portions 5, 5 located adjacent to each other with the circumferential groove 2 therebetween toward the other of the side surfaces, and one small-width projecting portion 47 projects from the other of the side surfaces toward the one of the side surfaces, into a space between the two small-width projecting portions 46, 46.

An end surface 46s of the small-width projecting portion 46 and an opposed surface 5s as a side surface of the land portion 5 opposed to the end surface 46s, which are close to each other, are both formed to be rough surfaces having a high frictional resistance. In addition, an end surface 47s of the small-width projecting portion 47 and an opposed surface 5s as a side surface of the land portion 5 opposed to the end surface 47s are both formed to be rough surfaces having a high frictional resistance. The rough surfaces are configured in the same manner as the rough surfaces in Example 1.

When the land portions 5 are grounded, the end surfaces 46s and 47s of the three sets of small-width projecting portions 46 and 47 and the opposed surfaces 5s as side surfaces of the land portions 5 opposed to the end surfaces 46s and 47s make contact with each other, the rough surfaces engage each other, and they do not slip on each other but together support the land portions 5. By this, rigidity of the land portions 5 is secured, and rolling resistance performance and wet grip performance are enhanced.

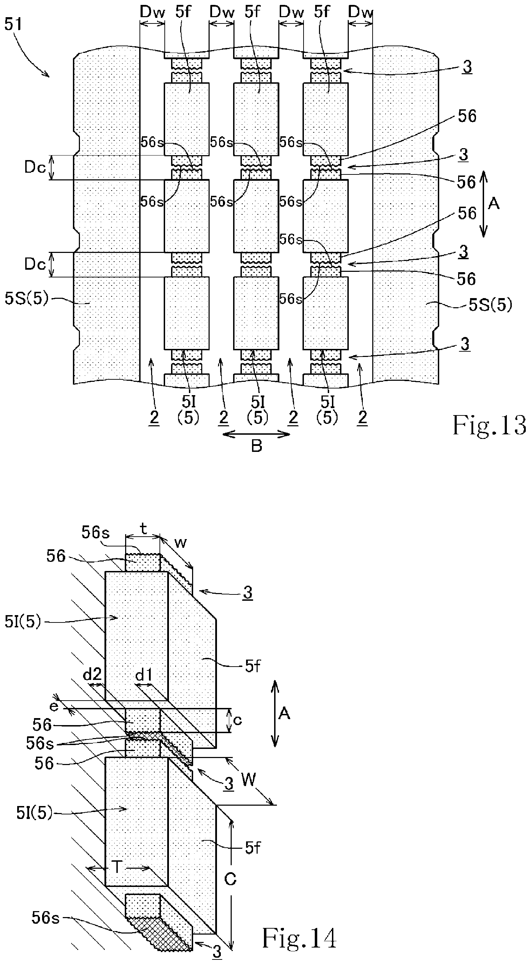

Now, Examples 6, 7, 8, 9, and 10 according to a second embodiment wherein projecting portions are provided in transverse grooves extending in a tread width direction in a tread of a pneumatic tire are illustrated in FIGS. 13 to 22, and will be described below.

Note that Examples 6, 7, 8, 9, and 10 have the same tread pattern as in Example 1, and the circumferential grooves 2, transverse grooves 3, and land portions 5 are denoted by the same reference symbols as used in Example 1.

First, as shown in FIGS. 13 and 14, a tread 51 of Example 6 has a configuration wherein projecting portions 56, 56 are formed to project from both of opposed side surfaces of inside land portions 51, 51 located adjacent to each other with the transverse groove 3 therebetween toward each other.

The projecting portion 56 projecting in the circumferential direction is formed to project in a quadrangular prismatic shape into a region that is higher than the groove bottom 1b and lower than the tread surface (outer surface) 5f of the land portion 5.

The projecting portions 56, 56 facing each other are formed in symmetry to project by the same projection amount c until they come close to each other.

Referring to FIG. 14, the projecting portion 56 projects to an intermediate depth position in the transverse groove 3, in a quadrangular prismatic shape having a thickness t in the tire radial direction, a width length w in the tread width direction, and a projection amount c in the tread circumferential direction.

Specifically, an outside surface (outer surface) of the projecting portion 56 is located at a position deeper by a spacing d1 than the tread surface 5f of the land portion 5 in the tire redial direction in the transverse groove 3, and an inside surface (inner surface) of the projecting portion 56 is located at a depth position higher by a spacing d2 than the groove bottom 1b of the transverse groove 3.

In addition, side surfaces of the projecting portion 56 are located at positions deviated toward the inner sides by a distance e from both ends in regard of the tire width direction of that projection side surface of the inside land portion 51 from which the projecting portion 56 projects.

Thus, the projecting portion 56 is formed to project in a quadrangular prismatic shape from the land portion 5 into the transverse groove 3.

Besides, closely opposed end surfaces 56s, 56s of the projecting portions 56, 56 projecting from opposed side surfaces of the land portions 5, 5 located adjacent to each other with the transverse groove 3 therebetween are both formed to be rough surfaces having a high frictional resistance.

In Example 6, the end surface 56s of the projecting portion 56 forms a rough surface wherein quadrangular pyramidal minute projections 7 are arranged in a matrix pattern, like the end surface 6s of the projecting portion 6 in Example 1, as depicted in FIG. 3.

Therefore, when the land portions 5 are grounded and a load F is exerted on the tread surface 5f, the land portions 5 undergo compressive deformation, the projecting portions 56, 56 formed to project from opposed side surfaces of the land portions 5, 5 located adjacent to each other with the transverse groove 3 therebetween come close to each other, the rough surfaces of the opposed end surfaces 56s, 56s of the projecting portions 56, 56 make contact with each other, the rugged patterns formed by the projections engage each other, whereby slipping is restrained, and the projecting portions 56, 56 making contact with each other can together firmly support the land portions 5, 5 on both sides thereof.

Therefore, compressive deformation of the land portions 5 is suppressed, falling-down (collapsing) of the land portions 5 is prevented, and rigidity of the land portions 5 is maintained, whereby uneven wear is restrained, energy loss due to hysteresis loss arising from deformation can be suppressed, and rolling resistance can be reduced.

Particularly at the time of acceleration or deceleration, falling-down (collapsing) of the land portions 5 is restrained, uneven wear can be restrained, and rolling resistance can be reduced.

In addition, spaces permitting drainage are formed on the inner and outer sides of the projecting portions 56, 56 projecting into the transverse grooves 3, and, since there is no projecting portion in the circumferential grooves 2, good draining property is realized, and wet grip performance can be enhanced.

With respect to a pneumatic tire having the tread structure of Example 6, rolling resistance performance and wet grip performance were tested, and the test results were compared with those of Prior Art Examples 3 and 4 for evaluation, the evaluation results being set forth in Table 2.

Specifications are also set forth in Table 2.

**[Table 2]**

| Tread structure | | Prior Art Example 3 (without projecting portions) | Prior Art Example 4 (without rough surfaces) | Example 6 (with rough surfaces) |
|---|---|---|---|---|
| Groove width | Dw(mm) | 10.0 | 10.0 | 10.0 |
| | Dc(mm) | 10.0 | 10.0 | 10.0 |
| Land portion | T(mm) | 20.0 | 20.0 | 20.0 |
| | C(mm) | 60.0 | 60.0 | 60.0 |
| | W(mm) | 35.0 | 35.0 | 35.0 |
| Projecting portion | t(mm) | - | 14.0 | 14.0 |
| | c(mm) | - | 4.8 | 4.8 |
| | w(mm) | - | 25.0 | 25.0 |
| | d1(mm) | - | 3.0 | 3.0 |
| | d2(mm) | - | 3.0 | 3.0 |
| | e(mm) | - | 5.0 | 5.0 |
| Rough surface | h(mm) | - | - | 2.0 |
| | θ(°) | - | - | 90 |
| Rolling resistance coefficient, RRC (index) | | 100 | 120 | 130 |
| Wet grip index | | 100 | 107 | 114 |

The pneumatic tire of Example 6 has a tire size of 315/70R22.5, like in Example 1, and the tread pattern of the same size is configured.

The pneumatic tires of Prior Art Examples 3 and 4 also had the same tire size and their treads were provided with the same tread pattern, as in Example 6.

In addition, the land portions in Prior Art Example 3 were not formed with projecting portions, and the land portions in Prior Art Example 4 were formed with the same projecting portions as those in Example 6.

The projecting portion 56 of Example 6 has a configuration wherein the thickness t in the tire radial direction is 14 mm, the width length w in the tread circumferential direction is 25 mm, the projection amount c in the tread width direction is 4.8 mm, the spacing d1 between the tread surface 5f and the upper surface of the projecting portion 56 is 3 mm, the spacing d2 between the groove bottom 1b and the lower surface of the projecting portion 56 is 3 mm, and the distance e from both ends in regard of the tread width direction of that projection side surface of the inside land portion 51 from which the projecting portion 56 projects to the projecting portion 56 is 5 mm.

The pneumatic tire of Prior Art Example 4 has a configuration wherein the same projecting portions as above are formed to project from both of opposed side surfaces of the land portions located adjacent to each other with the transverse groove therebetween toward each other.

However, while the end surfaces 56s of the projecting portions 56 in Example 6 are formed with rough surfaces wherein quadrangular pyramidal minute projections 7 are arranged in a matrix pattern, the end surfaces of the projecting portions in Prior Art Example 4 are not formed with rough surfaces but formed to be simple flat surfaces.

The pneumatic tires of Example 6 and Prior Art Examples 3 and 4 as above were put to the above-mentioned performance tests of rolling resistance performance and wet grip performance, and the evaluation results are set forth in Table 2.

As shown in Table 2, in Prior Art Example 4 wherein the projecting portions were present but their end surfaces were not rough surfaces, the rolling resistance coefficient RRC was 120 and the wet grip index was 107, both of which are superior to those in Prior Art Example 3 wherein the projecting portions were not provided.

On the other hand, in Example 6 wherein the end surfaces 56s of the projecting portions 56 were rough surfaces, the rolling resistance coefficient RRC was 130 and the wet grip index was 114, which shows further enhancement of rolling resistance performance and wet grip performance as compared to Prior Art Example 4.

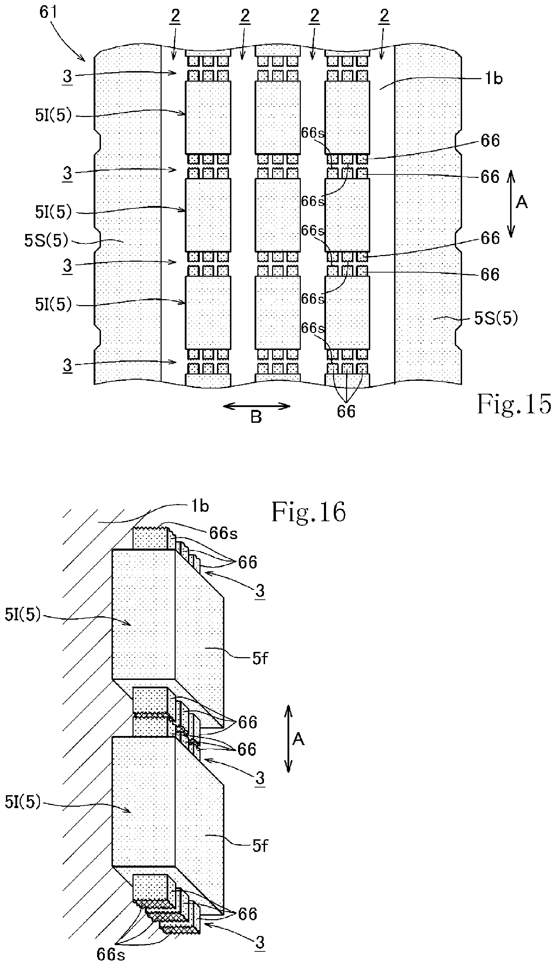

Next, as shown in FIGS. 15 and 16, a tread 61 of Example 7 in the second embodiment wherein projecting portions are provided in transverse grooves of the tread has a configuration wherein projecting portions 66, 66, 66 obtained by trisecting the projecting portion 56 of Example 6 in the width direction project from side surfaces of the land portions 5 into the transverse groove 3.

End surfaces 66s, 66s of the projecting portions 66, 66 that are closely opposed to each other are both formed with rough surfaces having a high frictional resistance.

When the land portions 5 are grounded, the three sets of opposed end surfaces 66s, 66s make contact with each other, the rough surfaces engage each other, and they do not slip on each other but together support the land portions 5. By this, rigidity of the land portions 5 is secured, and rolling resistance performance and wet grip performance are enhanced.

In Example 7, since spaces are present between the three projecting portions 66, 66, 66 projecting from the land portion 5, the draining property is superior to that in Example 6, and, particularly, enhanced wet grip performance is realized.

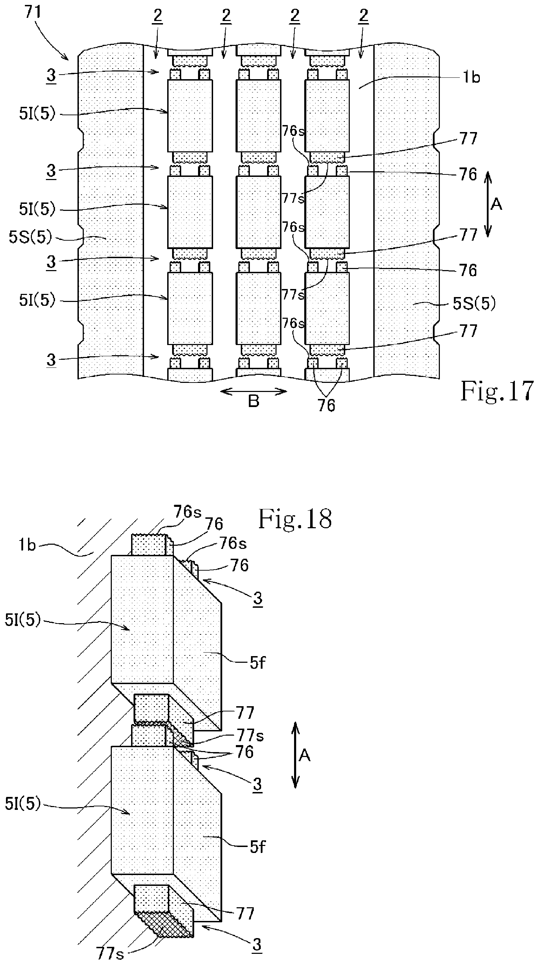

As illustrated in FIGS. 17 and 18, a tread 71 of Example 8 has a configuration wherein two small-width projecting portions 76, 76 project from one of opposed side surfaces of land portions 5, 5 located adjacent to each other with the transverse groove 3 therebetween, one large-width projecting portion 77 projects from the other of the side surfaces, and closely opposed end surfaces 76s, 76s and end surface 77s of the two small-width projecting portions 76, 76 and one large-width projecting portion 77 are formed with rough surfaces having a high frictional resistance.

When the land portions 5 are grounded, the opposed end surfaces 76s, 76s and end surface 77s make contact with each other, the rough surfaces engage each other, and they do not slip on each other but together support the land portions 5. By this, rigidity of the land portions 5 is secured, and rolling resistance performance and wet grip performance are enhanced.

In Example 8, also, a space is present between the two small-width projecting portions 76, 76, so that the draining property is further better than in Example 6, and, particularly, enhanced wet grip performance is realized.

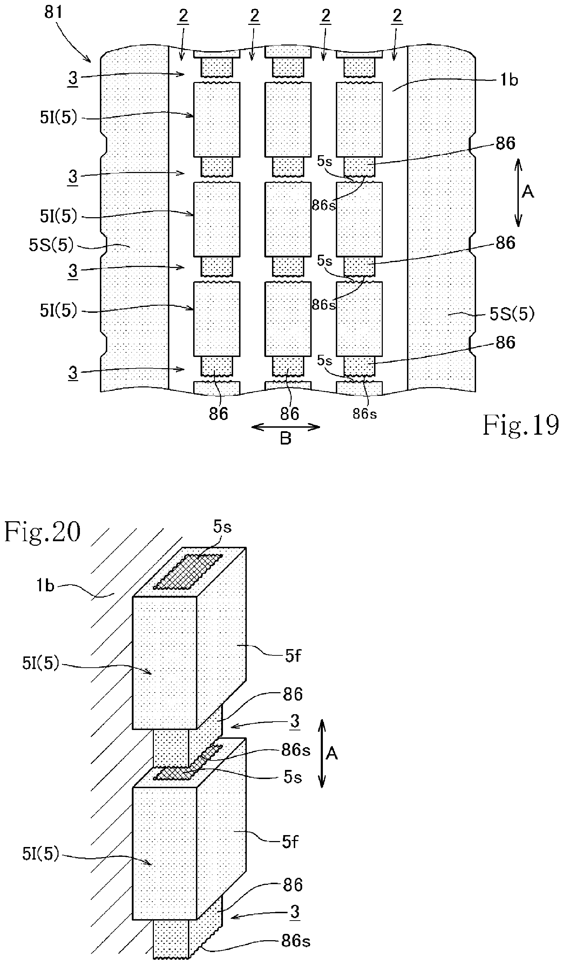

As shown in FIGS. 19 and 20, a tread 81 of Example 9 has a configuration wherein a projecting portion 86 is formed to project from one of opposed side surfaces of land portions 5, 5 located adjacent to each other with the transverse groove 3 therebetween toward the other of the side surfaces.

An end surface 86s of the projecting portion 86 and an opposed surface 5s as a side surface opposed to the end surface 86s, which are close to each other, are both formed to be rough surfaces having a high frictional resistance.

When the land portions 5 are grounded, the end surface 86s of the projecting portion 86 and the opposed surface 5s as the side surface opposed to the end surface 86s make contact with each other, the rough surfaces engage each other, and they do not slip on each other but together support the land portions 5. By this, rigidity of the land portions 5 is secured, and rolling resistance performance and wet grip performance are enhanced.

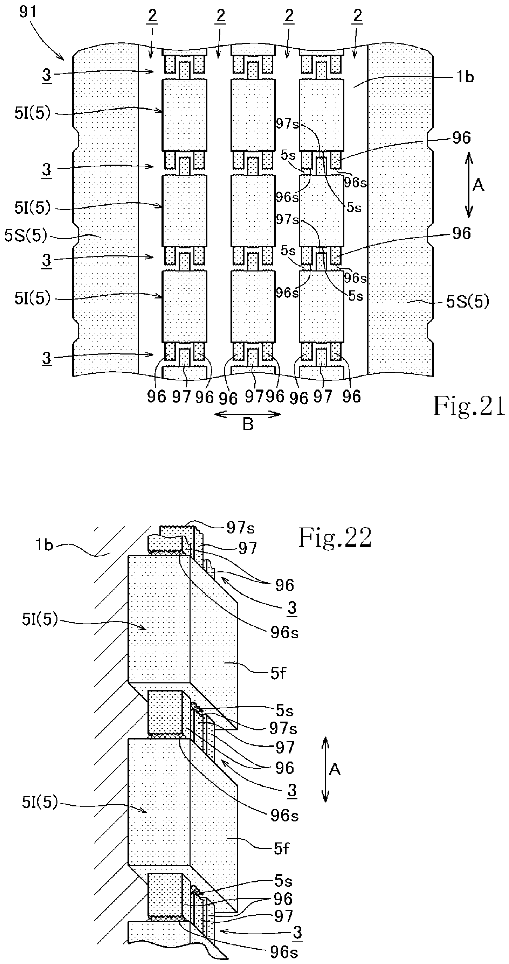

As illustrated in FIGS. 21 and 22, a tread 91 of Example 10 has a configuration wherein two small-width projecting portions 96, 96 project from one of opposed side surfaces of land portions 5, 5 located adjacent to each other with the transverse groove 3 therebetween toward the other of the side surfaces, and one small-width projecting portion 97 projects from the other of the side surfaces toward the one of the side surfaces, into a space between the two small-width projecting portions 96, 96.

An end surface 96s of the small-width projecting portion 96 and an opposed surface 5s as a side surface opposed to the end surface 96s, which are close to each other, are both formed to be rough surfaces having a high frictional resistance.

When the land portions 5 are grounded, the three sets of the end surfaces 96s of the small-width projecting portions 96 and the opposed surfaces 5s as the side surfaces opposed to the end surfaces 96s make contact with each other, the rough surfaces engage each other, and they do not slip on each other but together support the land portions 5. By this, rigidity of the land portions 5 is secured, and rolling resistance performance and wet grip performance are enhanced.

As has been described above, in the first embodiment, Examples 1, 2, 3, 4, and 5 wherein the projecting portions project into the circumferential grooves 2 have been shown, and, in the second embodiment, Examples 6, 7, 8, 9, and 10 wherein the projecting portions project into the transverse grooves 3 have been shown. However, a configuration may be adopted wherein the projecting portions project into both the circumferential grooves 2 and the transverse grooves 3. By such a configuration, both at the time of cornering and at the time of acceleration or deceleration of a vehicle, falling-down (collapsing) of the land portions is particularly restrained, uneven wear of the tread can be restrained, and rolling resistance can be reduced.

In addition, in the first embodiment, a structure may be adopted wherein the projecting portions are not provided in some of the plurality of circumferential grooves 2. In the second embodiment, also, a structure may be adopted wherein the projecting portions are not provided in some of the plurality of transverse grooves 3.

Further, even in the case where the projecting portions project into both the circumferential grooves 2 and the transverse grooves 3, a structure may be adopted wherein the projecting portions are not provided in some of the circumferential grooves 2 and the transverse grooves 3.

While the tread structures of the pneumatic tires in the embodiments of the present invention have been described above, the mode of carrying out the present invention is not limited to the above embodiments, and the invention can be carried out in various modes within the scope of the invention as defined by the claims.

For example, the circumferential grooves may not necessarily be parallel to the tire equatorial direction, and the transverse grooves may not necessarily be perpendicular to the tire equatorial direction; the grooves may be oblique at an angle relative to the tire equatorial direction.

### [Reference Signs List]

1 ··· Tread, 2 ··· Circumferential groove, 3 ··· Transverse groove, 5 ··· Land portion, 5s ··· Opposed surface, 6 ··· Projecting portion, 6s ··· End surface, 7 ··· Projection;
11 ··· Tread, 16 ··· Projecting portion, 16s ··· End surface;
21 ··· Tread, 26 ··· Small-width projecting portion, 26s ··· End surface, 27 ··· Large-width projecting portion, 27s ··· End surface;
31 ··· Tread, 36 ··· Projecting portion, 36s ··· End surface;
41 ··· Tread, 46 ··· Small-width projecting portion, 46s ··· End surface, 47 ··· Small-width projecting portion, 47s ··· End surface;
51 ··· Tread, 56 ··· Projecting portion, 56s ··· End surface;
61 ··· Tread, 66 ··· Projecting portion, 66s ··· End surface;
71 ··· Tread, 76 ··· Small-width projecting portion, 76s ··· End surface, 77 ··· Large-width projecting portion, 77s ··· End surface;
81 ··· Tread, 86 ··· Projecting portion, 86s ··· End surface;
91 ··· Tread, 96 ··· Small-width projecting portion, 96s ··· End surface, 97 ··· Small-width projecting portion.

## Claims

1. A pneumatic tire having a tread (1, 11, 21, 51, 61, 71) formed with a plurality of land portions (5) defined by a plurality of line grooves (2, 3),
wherein projecting portions (6, 16, 26, 56, 66, 76) are formed to project from both of opposed side surfaces of the land portions (5) located adjacent to each other with the line groove (2, 3) therebetween toward each other, the projecting portions (6, 16, 26, 56, 66, 76) each being formed in a region of the land portion (5) which is deeper than a tread surface (5f), and
closely opposed end surfaces (6s, 16s, 26s, 56s, 66s, 76s) of the projecting portions (6, 16, 26, 56, 66, 76) facing each other are both formed to be rough surfaces having a high frictional resistance;
**characterized in that**:
the projecting portions (6, 16, 26, 56, 66, 76) are formed to project in a quadrangular prismatic shape with a radially inside surface thereof located at a position higher than a bottom (1b) of the line groove (2, 3), and
quadrangular pyramidal minute projections (7) are arranged in a matrix pattern in the rough surfaces of the projecting portions (6, 16, 26, 56, 66, 76).

2. A pneumatic tire having a tread (31, 41, 81, 91) formed with a plurality of land portions (5) defined by a plurality of line grooves (2, 3),
wherein a projecting portion (36, 46, 86, 96) is formed to project from one of opposed side surfaces of the land portions (5) located adjacent to each other with the line groove (2, 3) therebetween toward the other of the side surfaces, the projecting portion (36, 46, 86, 96) being formed in a region of the land portion (5) which is deeper than a tread surface (5f), and
an end surface (36s, 46s, 86s, 96s) of the projecting portion (36, 46, 86, 96) and the side surface opposed to the end surface, which are close to each other, are both formed to be rough surfaces having a high frictional resistance; **characterized in that**:
the projecting portion (36, 46, 86, 96) is formed to project in a quadrangular prismatic shape with a radially inside surface thereof located at a position higher than a bottom (1b) of the line groove (2, 3), and
quadrangular pyramidal minute projections (7) are arranged in a matrix pattern in the rough end surfaces (36s, 46s, 86s, 96s) of the projection portions (36, 46, 86, 96) and in the rough side surfaces (5s) opposed to the end surfaces (36s, 46s, 86s, 96s).

3. The pneumatic tire according to claim 1 or 2, wherein the rough surface includes a multiplicity of tapered-off projections (7) formed on a flat surface.

4. The pneumatic tire according to claim 3, wherein the angle (θ) of a tapered-off tip of the projection (7) is around 90 degrees.

5. The pneumatic tire according to any one of claims 1 to 4,
wherein the line grooves are circumferential grooves (2) extending in a tread circumferential direction, and
the projecting portions (6, 16, 26, 36, 46) are formed to project into the circumferential grooves (2).

6. The pneumatic tire according to any one of claims 1 to 4,
wherein the line grooves are transverse grooves (3) extending in a tread width direction, and
the projecting portions (56, 66, 76, 86, 96) are formed to project into the transverse grooves (3).

7. The pneumatic tire according to any one of claims 1 to 4,
wherein the line grooves are circumferential grooves extending in a tread circumferential direction and transverse grooves extending in a tread width direction, and
the projecting portions are formed to project into the circumferential grooves and the transverse grooves.

8. The pneumatic tire according to claim 3,
wherein the tapered-off projections (7) have a height of 2 mm.

## Patentansprüche

1. Luftreifen, der eine Lauffläche (1, 11, 21, 51, 61, 71) aufweist, die mit mehreren Stegabschnitten (5) geformt ist, die durch mehrere Linienrillen (2, 3) definiert werden,
wobei vorspringende Abschnitte (6, 16, 26, 56, 66, 76) so geformt sind, dass sie von beiden von gegenüberliegenden Seitenflächen der Stegabschnitte (5), die zueinander benachbart mit der Linienrille (2, 3) zwischen denselben angeordnet sind, zueinander hin vorspringen, wobei die vorspringenden Abschnitte (6, 16, 26, 56, 66, 76) jeweils in einem Bereich des Stegabschnitts (5) geformt sind, der tiefer ist als eine Laufflächenoberfläche (5f), und
eng gegenüberliegende Stirnflächen (6s, 16s, 26s, 56s, 66s, 76s) der vorspringenden Abschnitte (6, 16, 26, 56, 66, 76), die einander gegenüberliegen, beide so geformt sind, dass sie raue Oberflächen sind, die einen hohen Reibungswiderstand aufweisen, **dadurch gekennzeichnet, dass**:
die vorspringenden Abschnitte (6, 16, 26, 56, 66, 76) so geformt sind, dass sie in einer viereckigen prismatischen Form vorspringen, wobei eine in Radialrichtung innere Fläche derselben an einer Position angeordnet ist, die höher ist als eine Sohle (1b) der Linienrille (2, 3), und
viereckige pyramidenförmige winzige Vorsprünge (7) in einem Matrixmuster in den rauen Oberflächen der vorspringenden Abschnitte (6, 16, 26, 56, 66, 76) angeordnet sind.

2. Luftreifen, der eine Lauffläche (31, 41, 81, 91) aufweist, die mit mehreren Stegabschnitten (5) geformt ist, die durch mehrere Linienrillen (2, 3) definiert werden,
wobei ein vorspringender Abschnitt (36, 46, 86, 96) so geformt ist, dass er von einer von gegenüberliegenden Seitenflächen der Stegabschnitte (5), die zueinander benachbart mit der Linienrille (2, 3) zwischen denselben angeordnet sind, zu der anderen der Seitenflächen hin vorspringt, wobei der vorspringende Abschnitt (36, 46, 86, 96) in einem Bereich des Stegabschnitts (5) geformt ist, der tiefer ist als eine Laufflächenoberfläche (5f), und
eine Stirnfläche (36s, 46s, 86s, 96s) des vorspringenden Abschnitts (36, 46, 86, 96) und die Seitenfläche, die der Stirnfläche gegenüberliegt, die eng beieinander liegen, beide so geformt sind, dass sie raue Oberflächen sind, die einen hohen Reibungswiderstand aufweisen, **dadurch gekennzeichnet, dass**:
der vorspringende Abschnitt (36, 46, 86, 96) so geformt ist, dass er in einer viereckigen prismatischen Form vorspringt, wobei eine in Radialrichtung innere Fläche desselben an einer Position angeordnet ist, die höher ist als eine Sohle (1b) der Linienrille (2, 3), und
viereckige pyramidenförmige winzige Vorsprünge (7) in einem Matrixmuster in den rauen Stirnflächen (36s, 46s, 86s, 96s) der vorspringenden Abschnitte (36, 46, 86, 96) und in den rauen Seitenflächen (5s), die den Stirnflächen (36s, 46s, 86s, 96s) gegenüberliegen, angeordnet sind.

3. Luftreifen nach Anspruch 1 oder 2, wobei die raue Oberfläche eine Vielzahl von abfallenden Vorsprüngen (7) einschließt, die auf einer flachen Oberfläche geformt sind.

4. Luftreifen nach Anspruch 3, wobei der Winkel (θ) einer abfallenden Spitze des Vorsprungs (7) um 90 Grad beträgt.

5. Luftreifen nach einem der Ansprüche 1 bis 4,
wobei die Linienrillen umlaufende Rillen (2) sind, die sich in einer Laufflächen-Umfangsrichtung erstrecken, und
die vorspringenden Abschnitte (6, 16, 26, 36, 46) so geformt sind, dass sie in die umlaufenden Rillen (2) vorspringen.

6. Luftreifen nach einem der Ansprüche 1 bis 4,
wobei die Linienrillen Querrillen (3) sind, die sich in einer Laufflächenbreitenrichtung erstrecken, und
die vorspringenden Abschnitte (56, 66, 76, 86, 96) so geformt sind, dass sie in die Querrillen (3) vorspringen.

7. Luftreifen nach einem der Ansprüche 1 bis 4,
wobei die Linienrillen umlaufende Rillen, die sich in einer Laufflächen-Umfangsrichtung erstrecken, und Querrillen, die sich in einer Laufflächenbreitenrichtung erstrecken, sind und
die vorspringenden Abschnitte so geformt sind, dass sie in die umlaufenden Rillen und die Querrillen vorspringen.

8. Luftreifen nach Anspruch 3,
wobei die abfallenden Vorsprünge (7) eine Höhe von 2 mm aufweisen.

## Revendications

1. Bandage pneumatique comportant une bande de roulement (1, 11, 21, 51, 61, 71) formée avec plusieurs parties d'appui (5) définies par plusieurs rainures de ligne (2, 3) ;
dans lequel des parties en saillie (6, 16, 26, 56, 66, 76) sont formées de sorte à faire saillie à partir des deux surfaces latérales opposées des parties d'appui (5) agencées de manière adjacente les unes aux autres, la rainure de ligne (2, 3) étant formée entre elles, les parties en saillie (6, 16, 26, 56, 66, 76) étant chacune formée dans une région de la partie d'appui (5) qui est plus profonde qu'une surface de la bande de roulement (5f) ; et
des surfaces d'extrémité étroitement opposées (6s, 16s, 26s, 56s, 66s, 76s) des parties en saillie (6, 16, 26, 56, 66, 76) se faisant face sont toutes les deux formées de sorte à constituer des surfaces rugueuses présentant une résistance au frottement élevée ; **caractérisé en ce que** :
les parties en saillie (6, 16, 26, 56, 66, 76) sont formées de sorte à faire saillie en une forme prismatique quadrangulaire, une surface radialement interne de celles-ci étant agencée au niveau d'une position plus élevée qu'un fond (1b) de la rainure de ligne (2, 3) ; et
de minuscules saillies pyramidales quadrangulaires (7) sont formées dans un motif de matrice dans les surfaces rugueuses des parties en saillie (6, 16, 26, 56, 66, 76).

2. Bandage pneumatique comportant une bande de roulement (31, 41, 81, 91) formée avec plusieurs parties d'appui (5) définies par plusieurs rainures de ligne (2, 3) ;
dans lequel une partie en saillie (36, 46, 86, 96) est formée de sorte à faire saillie à partir de l'une des surfaces latérales opposées des parties d'appui (5) agencées de manière adjacente les unes aux autres, la rainure de ligne (2, 3) étant formée entre elles, en direction de l'autre des surfaces latérales, la partie en saillie (36, 46, 86, 96) étant formée dans une région de la partie d'appui (5) qui est plus profonde qu'une surface de la bande de roulement (5f) ; et
une surface d'extrémité (36s, 46s, 86s, 96s) de la partie en saillie (36, 46, 86, 96) et la surface latérale opposée à la surface d'extrémité, qui sont proches l'une de l'autre, sont toutes les deux formées de sorte à être rugueuses, présentant une résistance au frottement élevée ; **caractérisé en ce que** :
la partie en saillie (36, 46, 86, 96) est formée de sorte à faire saillie en une forme prismatique quadrangulaire, une surface radialement interne de celle-ci étant agencée au niveau d'une position plus élevée qu'un fond (1b) de la rainure de ligne (2, 3) ; et
de minuscules saillies pyramidales quadrangulaires (7) sont agencées en un motif de matrice dans les surfaces d'extrémité rugueuses (36s, 46s, 86s, 96s) des parties en saillie (36, 46, 86, 96) et dans les surfaces latérales rugueuses (5s) opposées aux surfaces d'extrémité (36s, 46s, 86s, 96s).

3. Bandage pneumatique selon les revendications 1 ou 2, dans lequel la surface rugueuse inclut de multiples saillies effilées (7) formées sur une surface plate.

4. Bandage pneumatique selon la revendication 3, dans lequel l'angle (θ) d'une pointe effilée de la saillie (7) correspond à environ 90 degrés.

5. Bandage pneumatique selon l'une quelconque des revendications 1 à 4,
dans lequel les rainures de ligne sont des rainures circonférentielles (2) s'étendant dans une direction circonférentielle de la bande de roulement ; et
les parties en saillie (6, 16, 26, 36, 46) sont formées de sorte à faire saillie dans les rainures circonférentielles (2).

6. Bandage pneumatique selon l'une quelconque des revendications 1 à 4,
dans lequel les rainures de ligne sont des rainures transversales (3) s'étendant dans une direction de la largeur de la bande de roulement ; et
les parties en saillie (56, 66, 76, 86, 96) sont formées de sorte à faire saillie dans les rainures transversales (3).

7. Bandage pneumatique selon l'une quelconque des revendications 1 à 4,
dans lequel les rainures de ligne sont des rainures circonférentielles s'étendant dans une direction circonférentielle de la bande de roulement et des rainures transversales s'étendant dans une direction de la largeur de la bande de roulement ; et
les parties en saillie sont formées de sorte à faire saillie dans les rainures circonférentielles et les rainures transversales.

8. Bandage pneumatique selon la revendication 3,
dans lequel les saillies effilées (7) ont une hauteur de 2 mm.
